# EUROPEAN PATENT APPLICATION

(11) **EP 4 641 724 A1**
(43) Date of publication of application: **29.10.2025**
(21) Application number: 25171644.5
(22) Date of filing: 22.04.2025
(51) Int. Cl.: H01M 10/04, H01M 50/107, H01M 50/167, H01M 50/152

(54) **BATTERY CELL AND MANUFACTURING METHOD OF THE SAME**

(30) Priority: 22.04.2024 KR 20240053439
(71) Applicant: SK On Co., Ltd., Seoul 03161 (KR)
(72) Inventor: CHEONG, Hoemin, 34124 Daejeon (KR)
(74) Representative: Stolmár & Partner Patentanwälte PartG mbB

(57) **Abstract**

The present disclosure relates to a battery cell comprising: an electrode assembly including a first electrode, a second electrode, and a separator disposed between the first electrode and the second electrode; a case having a first opening at one end and forming a space in which the electrode assembly is accommodated through the first opening; and a cap assembly coupled with the case to form the space together with the case and closing the first opening.

## Description

### BACKGROUND OF THE INVENTION

### 1. Field

The present disclosure relates to a battery cell and a manufacturing method thereof. Specifically, the present disclosure relates to a battery cell capable of preventing corrosion and a method for manufacturing the same.

### 2. Description of the Related Art

Secondary batteries can be classified into a can-type secondary batteries and a pouch-type secondary batteries depending on the shape of the case. In addition, the can-type secondary batteries can be further classified into cylindrical batteries and prismatic batteries depending on the shape of the metal can or case. Generally, cases are made using nickel-plated steel sheets to prevent corrosion.

In general, the case may be formed into a columnar shape or a cup shape in which a sheet having a predetermined thickness is opened at one end by a deep drawing method and a receiving space is formed therein. The case may then be subjected to beading and crimping in order to couple the cap assembly to the open end. A recessed portion supporting the cap assembly may be formed by beading. The cap can then be brought into contact with and joined to the cap assembly by crimping after the recessed portion is arranged to support the cap assembly.

On the other hand, if only the deep drawing operation is performed, the open end may have an irregular shape. Before the beading operation, the case may be cut to have a predetermined height in order to make the open end into a smooth shape. However, since the cut surface exposed by cutting the case is not nickel-plated, the steel sheet may be exposed to air as it is. As a result, corrosion of the case can proceed through the exposed cut surface. Therefore, it is necessary to prevent corrosion of the case.

According to an aspect of the present disclosure, the problem is to prevent corrosion of the case.

According to another aspect of the present disclosure, the problem is to enable an operator to handle the case safely.

According to another aspect of the present disclosure, the problem is to fix the case and the cap assembly more firmly.

According to another aspect of the present disclosure, the problem is to improve the sealing of the case and the cap assembly.

According to another aspect of the present disclosure, the problem is to improve the life of the battery cell.

The present disclosure can be widely applied to electric vehicles, battery charging stations, energy storage systems (ESS) and other green technology fields such as solar power generation and wind power generation using batteries. In addition, the present disclosure can be used in eco-friendly electric vehicles, hybrid vehicles, and the like to prevent climate change by suppressing air pollution and greenhouse gas emission.

### SUMMARY OF THE INVENTION

A battery cell according to an embodiment of the present disclosure may comprise an electrode assembly including a first electrode, a second electrode, and a separator disposed between the first electrode and the second electrode; a case having a first opening at one end and forming a space in which the electrode assembly is accommodated through the first opening; and a cap assembly coupled with the case to form the space together with the case and closing the first opening; wherein the case may include: a recessed portion formed by recessing a region spaced apart from the one end of the case by a predetermined distance toward the space and supporting the cap assembly; a bent portion bent inwardly toward the space between one end of the case and the recessed portion; and a hemming portion bent toward the recessed portion in an area including the one end of the case to be in contact with the cap assembly

The upper side of the bent portion may be parallel to a cross section perpendicular to the height direction of the case.

The cap assembly may include a gasket including a sheet-shaped flat portion, a second opening penetrating the flat portion, and a side portion bent along the height direction of the case at the outermost edge of the flat portion; and a cap plate located on the flat portion to close the first opening and the second opening.

The side portion may include a folding portion folded toward the cap plate together with the bent portion.

A part of the folding portion may be compressed by the hemming portion.

The case may have a cylindrical shape, the bent portion may be bent along the radial direction of the case toward the central axis of the case parallel to the height direction of the case, and the hemming portion may be formed by bending in a direction away from the central axis of the case along the radial direction of the case.

The recessed portion may be formed along the circumferential direction of the case.

The cap assembly may include a gasket including a sheet-shaped flat portion, a disc-shaped flat portion, a circular second opening penetrating the flat portion, and a side portion formed by bending along the height direction of the case on the outer surface of the flat portion; a disc-shaped cap plate positioned on the flat portion to close the first opening and the second opening ; and a folding portion folded toward the central axis along the radial direction of the case by the bent portion among a portion of the side portion.

A part of the folding portion may be compressed by the hemming portion.

The outer diameter of the flat portion may be larger than the outer diameter of the cap plate.

The radius from the central axis to the folding portion may be smaller than the radius of the second opening.

The radius from the central axis to the bent portion may be larger than the radius from the central axis to the folding portion.

The diameter from the central axis to the cap plate may be larger than the diameter of the second opening.

The recessed portion may be located closer to the cap assembly rather than the electrode assembly.

The battery cell may further comprise an electrolyte for immersing the electrode assembly in the space.

A method according to an embodiment of the present disclosure for manufacturing a battery cell including an electrode assembly and a case forming a space for accommodating the electrode assembly may comprise: a step of inserting the electrode assembly through a first opening located at one end of the case; a step of recessing an area apart from one end of the case by a distance toward the space to form a recessed portion; a step of arranging a cap assembly for closing the first opening to be supported by the recessed portion; and a step of forming a hemming portion by bending an area including the one end of the case to face an inner surface of the space; and a step of forming a bent portion by bending a portion between the one end of the case and the recessed portion so that the hemming portion comes into contact with the cap assembly.

The method may further comprise a sizing step of pressing the bent portion and the hemming portion so that the height from other end of the case to the cap assembly becomes a predetermined height after the step of forming the bent portion.

The method may further comprise a step of injecting an electrolyte into the space through an injection hole penetrating the cap assembly after the step of forming the recessed portion.

The method may further comprise a step of charging and discharging the battery cell after the step of forming the bent portion.

The method may further comprise a step of degassing for removing the gas inside the space through the injection hole after the step of charging and discharging the battery cell.

According to an embodiment of the present disclosure, the corrosion of the case can be prevented.

According to another embodiment of the present disclosure, the operator may safely handle the case.

According to another embodiment of the present disclosure, the case and the cap assembly can be fixed more firmly.

According to another embodiment of the present disclosure, it is possible to improve the sealing of the case and the cap assembly.

According to another embodiment of the present disclosure, it is possible to improve the life of a battery cell.

### BRIEF DESCRIPTION OF THE DRAWINGS

FIG. 1 illustrates an example of a battery cell according to the present disclosure.
FIG. 2 illustrates an example of an electrode assembly.
FIG. 3A illustrates an example of inserting an electrode assembly into a case.
FIG. 3B illustrates an example of welding the first electrode and the first current collector.
FIG. 3C illustrates an example of forming a recessed portion.
FIG. 3D illustrates an example of welding the second current collector and the case.
FIG. 3E illustrates an example of injecting electrolyte into the receiving space.
FIG. 3F illustrates an example of forming a hemming portion and a bent portion.
FIG. 3G illustrates an example of charging, discharging, and degassing a battery cell according to the present disclosure.
FIG. 3H illustrates an example of sealing a cap assembly.
FIG. 4 illustrates a cross-section of an exemplary battery cell according to the present disclosure.
FIG. 5 is an enlarged view of an exemplary bent portion and hemming portion.
FIG. 6 is an enlarged view of a part of FIG. 4.
FIG. 7 is a flowchart illustrating a method of assembling a battery cell according to the present disclosure.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Throughout the specification, when it is mentioned that an element is "on" another element, this includes not only the case where the element is in contact with the other element, but also the case where there is another element between the two elements.

For example, expressions such as "same" indicate not only a state in which they are strictly the same, but also a state in which there is a tolerance or a difference in the degree to which the same function is obtained.

For example, an expression indicating relative or absolute arrangement such as "in a direction," "along a direction," "in parallel," "vertically," "centrally," "concentrically," or "coaxially" not only strictly indicates such arrangement, but also indicates a state of relative displacement with tolerance or an angle or distance to the extent that the same function is obtained.

Throughout the specification, when it is mentioned that a part "includes" or "comprises" a component, this does not mean that it excludes other components, but rather that it may include other components, unless otherwise specifically stated. The terms such as "about" and "substantially", which indicate degrees, as used throughout the specification, are used in a meaning that is at or near a numerical value when manufacturing and material tolerances inherent in the meanings stated are given, and are used to prevent unscrupulous infringers from unfairly exploiting the disclosure, which states precise or absolute numbers to aid understanding of the present disclosure. The terms "step of doing ~" or "step of ~" as used throughout the specification do not mean "step for ~".

As used herein, the singular forms "a," "an," and "the" include plural referents unless the context clearly dictates otherwise.

Hereinafter, with reference to the accompanying drawings and the description below, preferred embodiments of the present disclosure are described in detail. However, the present disclosure is not limited to the embodiments described here, but may be embodied in other forms. Throughout the specification, the same reference numerals represent the same components.

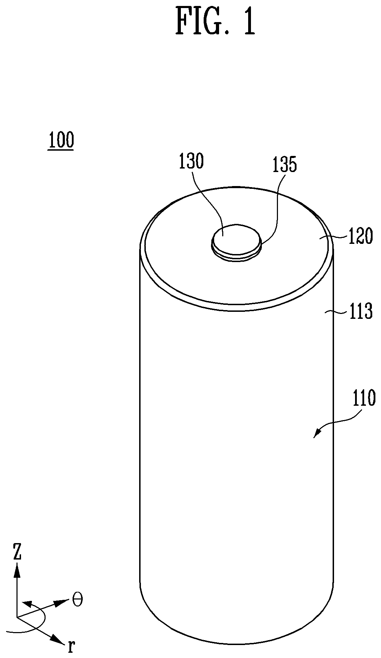

FIG. 1 illustrates an example of a battery cell according to the present disclosure.

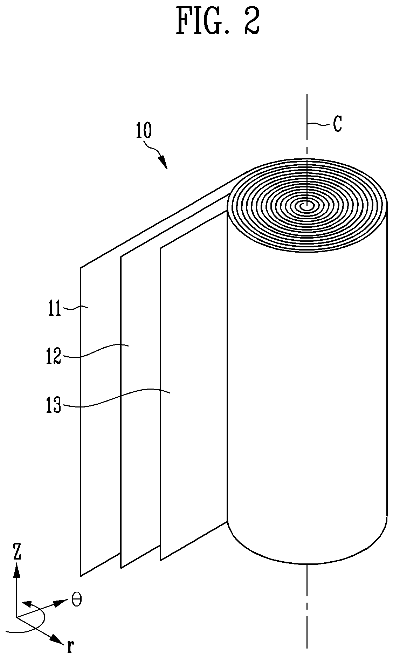

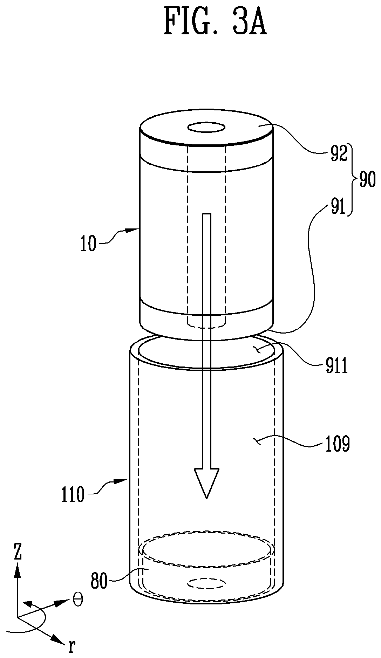

Referring to FIG. 1, a battery cell 100 according to the present disclosure may include a case 110, a cap assembly 120, an electrode assembly 10 (see FIG. 2), and a current collector 90 (see FIG. 3A). The battery cell 100 may be a secondary battery capable of being charged and discharged multiple times. For example, the secondary battery may be one of, but not limited to, a lithium cobalt battery, a lithium high nickel battery, a lithium iron phosphate battery, a lithium-ion battery, a lithium polymer battery, a lithium sulfur battery, a nickel hydrogen battery, a nickel cadmium battery, a sodium battery, or an all-solid-state battery, and may be transformed into various types of secondary batteries. In an embodiment, the battery cell 100 may further include an electrode terminal 130.

The case 110 can accommodate the electrode assembly 10 therein. In addition, the case 110 can accommodate a current collector 90 electrically connected to the electrode assembly 10. On the other hand, the case 110 may include various metals such as iron and aluminum, alloys in which these are combined, and materials such as plastic, ceramic, or carbon.

Referring to FIG. 1, for example, the case 110 may be in the shape of a container or cup that is partially open or has one end opened and extends in the height direction (Z direction). That is, the space 109 (see FIG. 3A) in which the electrode assembly 10 can be accommodated inside the case 110 shows an example in which the case 110 is cylindrical, but the shape of the case 110 is not limited thereto.

The cap assembly 120 may seal the case 110. For example, after the electrode assembly 10 and the current collector 90 are accommodated in the inner space of the case 110, the cap assembly 120 may be coupled to the case 110. That is, the case 110 and the cap assembly 120 may surround the outside of the electrode assembly 10 and the current collector 90.

Referring to FIG. 1, one cross-section of the cap assembly 120 and the case 110 may be circular. However, this is only one embodiment, and the shapes of the cap assembly 120 and the case 110 coupled to each other may be deformed into various shapes such as a square or a hexahedron.

Referring to FIG. 1, the case 110 may include a body 113 that forms a portion of the case 110 and in which the electrode assembly 10 and the current collector 90 are accommodated. The body 113 may form a side surface of the case 110 along the circumferential direction θ of the case 110.

FIG. 2 illustrates an example of an electrode assembly.

The electrode assembly 10 may include a first electrode 11, a second electrode 13 having an electrical polarity different from that of the first electrode, and a separator 12 disposed between the first electrode 11 and the second electrode 13.

Referring to FIG. 2, the electrode assembly 10 may be formed by stacking the first electrode 11, the separator 12, and the second electrode 13 and then winding them. The wound electrode assembly 10 may be referred to as a jelly roll.

The electrode assembly 10 has a circular cross section. Therefore, the electrode assembly 10 may be formed by winding the electrode assembly 10 around the central axis C in a roll shape. If the case 110 is cylindrical or cylindrical in shape, the central axis C may be the central axis of the case 110.

Unlike the electrode assembly 10 shown in FIG. 2, the electrode assembly 10 may be wound such that a cross section thereof is in the form of an Oval or an Oblong. That is, the wound shape of the electrode assembly 10 may vary depending on the shape of the case 110. In addition, when the case 110 has a rectangular parallelepiped shape, the electrode assembly 10 may be in the form of stacking in which the first electrode 11, the second electrode 13, and the separation membrane 12 are stacked in a predetermined stacking direction.

FIGS. 3A to 3H illustrate an example of a manufacturing method for manufacturing the battery cell 100 according to the present disclosure in order.

FIG. 3A illustrates an example of inserting an electrode assembly into a case.

Referring to FIG. 3A, the electrode assembly 10 and a current collector 90 connected to the electrode assembly 10 may be inserted into a case 110 forming a receiving space 109.

The electrode assembly 10 and the current collector 90 may be inserted into the space 109 through the first opening 911.

The current collector 90 may include at least one of a first current collector 91 and a second current collector 92. The first current collector 91 may be electrically connected to the first electrode 11. The second current collector 92 may be electrically connected to the second electrode 13. Referring to FIG. 3A, the first current collector 91 may be connected to the first electrode 11 on the lower side of the electrode assembly 10 along the height direction of the case 110. Alternatively, the second current collector 92 may be connected to the second electrode 13 on the upper side of the electrode assembly 10 along the height direction of the case 110. However, this is only an example, and the positions of the first electrode 11 and the second electrode 13 may be changed or both may be located in the same direction. Regardless of where it is located, any one of the first electrode 11 and the second electrode 13 may be connected to the electrode terminal 130 shown in FIG. 1 and connected to the outside.

The current collector 90 may include a conductive material such as copper, gold, silver, or aluminum. If it is electrically conductive, the current collector 90 may be formed of a polymer material as well as a metal material.

On the other hand, before the electrode assembly 10 and the current collector 90 are inserted into the space 109, the case 110 may include an insulating member 80 for electrical insulation between the first current collector 91 and the case 110.

Meanwhile, the case 110 including the space 109 may be formed by recessing a sheet-shaped steel sheet in one direction. This may be referred to as Deep Drawing processing. Through the deep drawing, the battery cell manufacturing method according to the present disclosure may form an opened case 110 including a first opening at one end and a closed case 110 at the other end. Meanwhile, the case 110 may use a coated steel sheet to prevent corrosion. Preferably, the coating may be nickel plating. Thus, as an example, the case 110 may have a nickel-coated steel sheet formed by deep drawing.

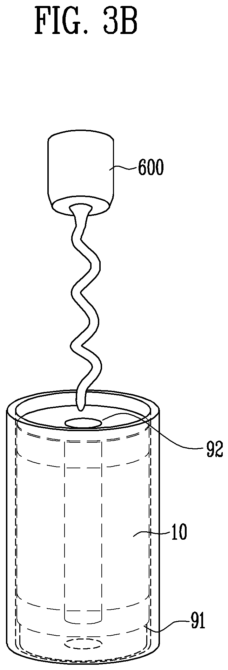

FIG. 3B illustrates an example of welding the first electrode and the first current collector.

The first current collector 91 needs to electrically connect the first electrode 11 and the outside. To this end, the battery cell manufacturing method according to the present disclosure can weld a terminal (not shown) electrically connected to the first current collector 91.

Referring to FIG. 3B, since the first current collector 91 is located below the electrode assembly 10, the first current collector and the terminal can be welded to each other through the center of the electrode assembly 10. The welding may be ultrasonic welding. To this end, the battery cell manufacturing method according to the present disclosure may utilize an ultrasonic welding device 600 that generates ultrasonic waves to perform welding. However, the welding is not limited thereto.

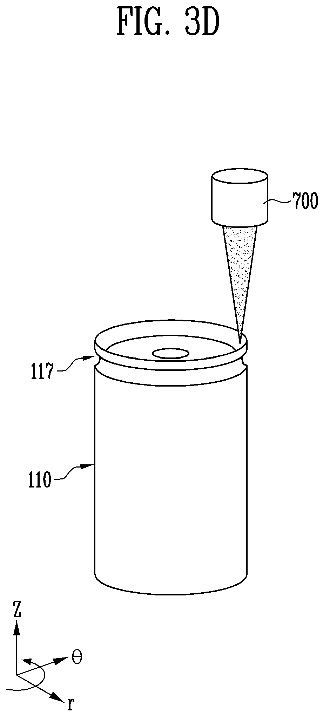

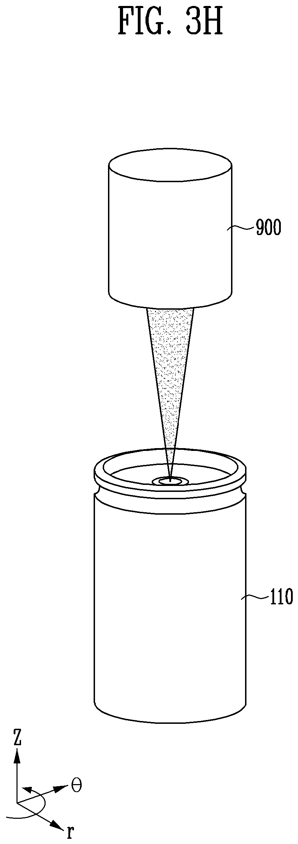

For example, FIG. 3B shows the ultrasonic waves emitted from the ultrasonic welding device 600, which is merely an illustration for explanation. Similarly, FIG. 3D and FIG. 3H also illustrate the laser for explanation.

On the other hand, when the electrode assembly 10 is in the form of a circular roll, considering the degree of bending of the first electrode 11 and the second electrode 13, the center portion may be an empty space. Thus, the first current collector 91 and the terminal can be welded to each other through the center portion of the electrode assembly 10.

Thereafter, a core member (not shown) may be inserted into the center portion of the electrode assembly 10.

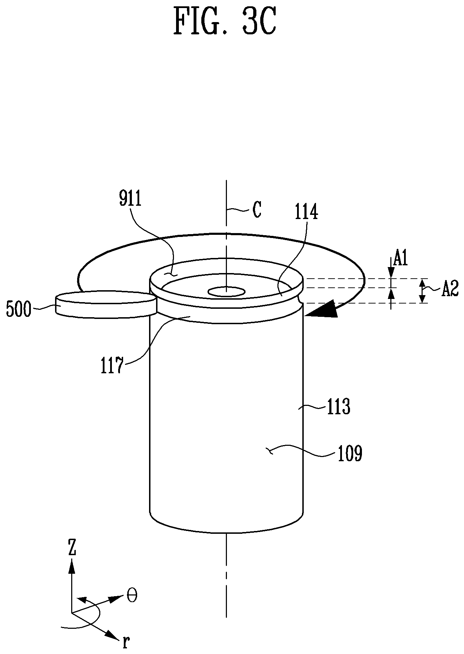

FIG. 3C illustrates an example of forming a recessed portion.

Referring to FIG. 3C, in the battery cell manufacturing method according to the present disclosure, before the cap assembly 120 is coupled to the case 110, a region of the case 110 may be recessed toward the space 109 to form a recessed portion 117.

Referring to FIG. 3C, when the case 110 is cylindrical, the recessed portion 117 may be formed along the circumferential direction θ of the case 110. The recessed portion 117 may be recessed inwardly along the radial direction r of the case 110. This is to prevent the cap assembly 120 from falling into the space 109 when inserted into the case 110.

That is, the recessed portion 117 may serve as a threshold to support the cap assembly 120.

To this end, the battery cell manufacturing method according to the present disclosure may utilize a beading device capable of beading processing. The beading device may rotate clockwise or counterclockwise along the circumferential direction θ while the disk-shaped roller 500 presses the outer circumferential surface of the case 110, thereby recessing a portion of the case 110 toward the space 109.

The radius of curvature of the recessed portion 117 may also be determined according to the radius of curvature of each of the rollers 500. The recessed portion 117 may be located between the body 113 and the first opening 911 of the case 110.

More specifically, the recessed portion 117 may be located closer to the first opening 911 rather than to the bottom surface of the case 110.

Alternatively, the recessed portion 117 may be formed in a region spaced apart from one end of the case 110 provided with the first opening 911 by a predetermined distance. More specifically, the recessed portion 117 may be formed between the first distance A1 and the second distance A2 at one end of the case 110.

On the other hand, the recessed portion 117 is formed at one end of the case 110 or at a second distance A2 from the first opening 911 in consideration of a region in which the bent portion 114 to be described later is to be formed in the case 110.

Meanwhile, the recessed portion 117 may be formed in the entire outer periphery of the case 110 along the circumferential direction θ. Alternatively, the recessed portion 117 may be formed only at a portion of the outer periphery of the case 110 along the circumferential direction θ as long as the recessed portion 117 can support the cap assembly 120.

FIG. 3D illustrates an example of welding the second current collector and the case.

In the battery cell manufacturing method according to the present disclosure, before the cap assembly 120 is coupled to the case 110, the second current collector 92 and the case 110 may be welded to electrically connect the second electrode 13 and the outside through the second current collector 92. The case may have the same polarity as the second electrode except for a terminal connected to the first electrode 11 through the first current collector 91.

Referring to FIG. 3D, the battery cell manufacturing method according to the present disclosure may utilize a laser welding device 700 for welding the second current collector 92 and the case 110. By welding the outer side surface or the outer peripheral surface of the second current collector 92 and the inner side surface or the inner peripheral surface of the case 110, they may be electrically connected to each other.

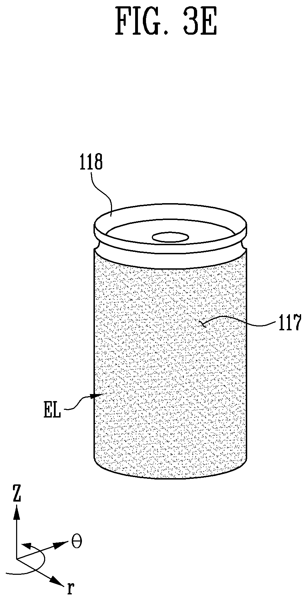

FIG. 3E illustrates an example of injecting electrolyte into the receiving space.

Referring to FIG. 3E, the battery cell manufacturing method according to the present disclosure may inject an electrolyte into the space 109 before arranging the cap assembly 120.

FIG. 3E shows the state in which the electrode assembly 10 is immersed by the injection of the electrolyte indicated by shading. That is, the electrolyte may be injected into the space 109 to immerse the electrode assembly 10.

For the purpose of visual explanation, only the injection of the electrolyte is indicated by shading, and considering that the case 110 is formed of a plated steel sheet, the case 110 may be made of an opaque material.

Meanwhile, the circumference of the first opening 911 or the open end of the case 110 formed through the deep drawing may have an irregular height in the height direction of the case 110. In order to adjust this to a certain height, according to the battery cell manufacturing method of the present disclosure, the case 110 may be cut along the circumferential direction θ at a certain height so that the perimeter of the irregular first opening 911 is smooth.

As such, the case 110 may include a cut surface 118 that is exposed to the outside during the manufacturing process. The cut surface 118 may be vulnerable to corrosion as it is exposed to the outside. The battery cell 100 and the battery cell manufacturing method according to the present disclosure relate to the battery cell 100 for preventing corrosion of the cut surface 118 and the manufacturing method for manufacturing the battery cell 100.

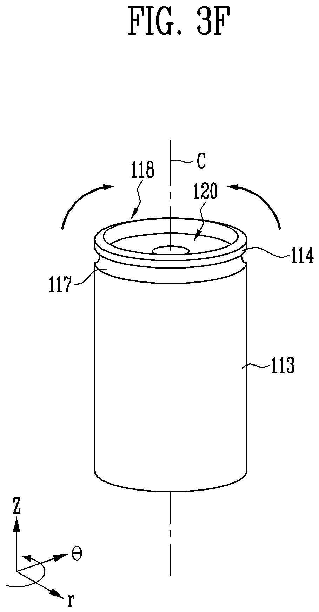

FIG. 3F illustrates an example of forming a hemming portion and a bent portion.

For example, FIG. 3F shows the bent portion 114 and the cut surface 118 in over scale for purposes of illustration.

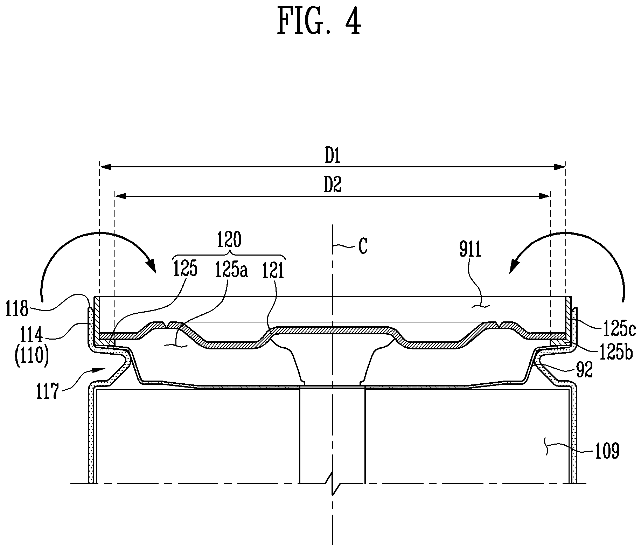

Referring to FIG. 3F, the battery cell manufacturing method according to the present disclosure may arrange the cap plate 121 inside the case 110 or in the space 109 so that the cap plate 121 (see FIG. 4) comes into contact with the recessed portion 117.

That is, the cap plate 121 may be supported by the recessed portion 117 and positioned at a constant height. That is, the recessed portion 117 can prevent the cap plate 121 from being inserted into the space at a predetermined depth or more along the height direction of the case 110.

Then, in the battery cell manufacturing method according to the present disclosure, a region of the case 110 located between the first opening 911 and the recessed portion 117 may be bent toward the cap plate 121 to couple the cap plate 121 and the case 110.

Specifically, the case 110 may include a cylindrical body 113, a recessed portion 117 located between the body 113 and the first opening 911, and a bent portion 114 formed between the recessed portion 117 and the first opening 911. The bent portion 114 may include an open end of the case 110.

Thus, the bent portion 114 may refer to a region between the open end and the recessed portion 117.

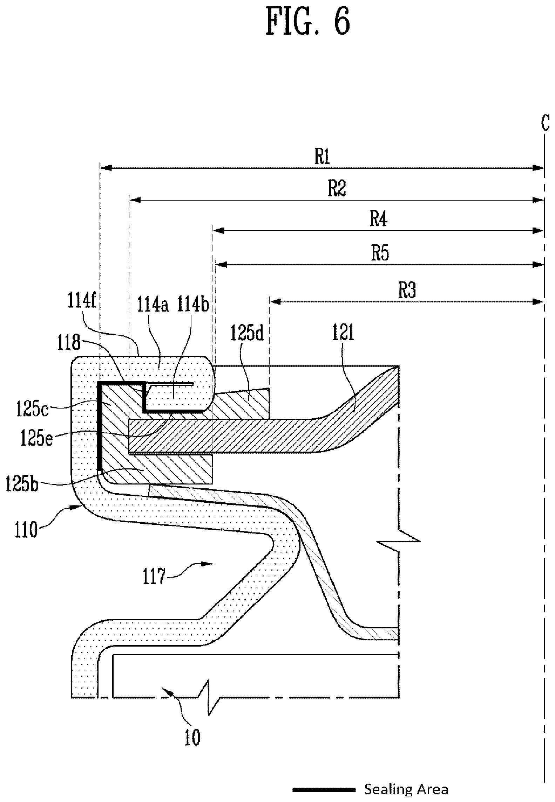

First, the bent portion 114 including the cutting surface 118 may be bent toward the cap plate 121. As a result, the cutting surface 118 will face the central axis C of the case. The bent portion 114 may then include a hemming portion 114b (see FIG. 6) that is bent such that the region including the cut surface 118 faces the inner side of the case 110 again. Accordingly, the bent portion 114 may be bent twice in different regions. This was explained in more detail through FIGS. 4 and 6.

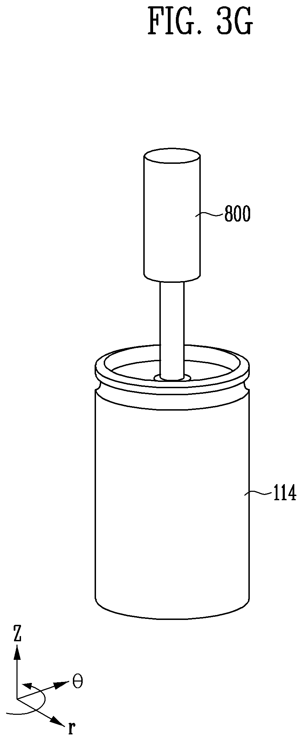

FIG. 3G illustrates an example of charging, discharging, and degassing a battery cell according to the present disclosure.

After the cap assembly 120 and the case 110 are combined, the battery cell manufacturing method according to the present disclosure may activate the battery cell 100 manufactured through charging and discharging. Through the charging and discharging process, a solid electrolyte interphase layer may be activated on the surface of the cathode in the electrode assembly 10. During the charging and discharging process, some of the electrolyte may vaporize and gas may fill the inside of the space 109. The gas may cause deformation of the case 110 and thus needs to be removed.

The battery cell manufacturing method according to the present disclosure may perform degassing for removing gas from the space 109 during or after the charging and discharging process. To this end, the battery cell manufacturing method according to the present disclosure may utilize a degassing device 800 that discharges the gas through an injection hole (not shown) that passes through one of both ends of the case 110. The injection hole (not shown) may be formed through the cap assembly 120.

FIG. 3H illustrates an example of sealing a cap assembly.

In the battery cell manufacturing method according to the present disclosure, after the degassing processing described in FIG. 3G is completed, the injection hole (not shown) may be covered and sealed to seal the case 110. The sealing of the injection hole can be carried out by means of a welding device 900.

FIG. 4 illustrates a cross-section of an exemplary battery cell according to the present disclosure.

Specifically, FIG. 4 shows a cross section in which the cap assembly 120 is supported by the recessed portion 117.

In addition, FIG. 4 shows a cross-section of the battery cell 100 being manufactured in which the bent portion 114 has not yet been bent. Therefore, the second current collector 92 may be welded to the case 110, and the space 109 may accommodate the electrode assembly 10 (see FIG. 2) and the current collector 90 (see FIG. 3A).

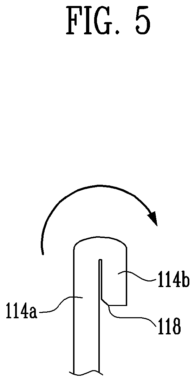

Referring to FIG. 4 and FIG. 6, a battery cell 100 according to the present disclosure may include an electrode assembly 10 (see FIG. 2) including a first electrode 11 (see FIG. 3), a second electrode 13 (see FIG. 4), and a separator 12 (see FIG. 5) disposed between the first electrode 11 and the second electrode 13, a case 110 including a first opening 911 at one end and forming a space 109 in which the electrode assembly 10 is accommodated through the first opening 911, and a cap assembly 120 coupled to the case 110 to form the space 109 together with the case 110 and close the first opening 911.

In addition, the case 110 may include a recessed portion 117 formed by recessing a region spaced apart from one end of the case 110 by a predetermined distance toward the space 109 to support the cap assembly 120, a bent portion 114 bent inward toward the space 109 between one end of the cases 110 and the recessed portions 117, and a hemming portion 114b (see FIG. 6) in which a region of the bent portion 114 including one end of the casing 110 is bent toward the recessed portions 117 to be in contact with the cap assembly 120.

The cap assembly 120 may include a cap plate 121 that closes the first opening 911 and a gasket 125 that surrounds the cap plate and is positioned between the case 110 and the cap plate 121.

The gasket 125 may include a sheet-shaped flat portion 125b (see FIG. 6), a second opening 125a through the flat portion 125b, and a side portion 125c (see FIG. 5) that is bent along the height direction of the case 110 at the outermost edge of the flat portion 135b.

Meanwhile, the cap plate 121 may close the second opening 125a and the first opening 911.

If the case 110 is cylindrical, the bent portion 114 may be bent along the radial direction of the case 110 toward the central axis C of the case 110 parallel to the height direction of the case 100. The hemming portion 114b may be bent in a direction away from the central axis C of the case 110 along the radial direction of the case 110.

In addition, the recessed portion 117 may be formed along the circumferential direction of the case 110.

In addition, the cap assembly 120 may include a gasket 125 including a disc-shaped flat portion 125b, a circular second opening 125a penetrating the flat portion 125b, and a side portion 125c formed by being bent along the height direction of the case 110 on the outer surface of the flat portion 135b, a disc-shaped cap plate 121 positioned on the flat portion 125b to close the second opening 125a and the first opening 911, and a folding portion 125d (see FIG. 6) bent toward the central axis C along the radial direction of the case 100 by the bent portion 114 in a portion of the side portion 125c.

On the other hand, since the bent portion 114 is not bent, one end (or the opened one end) of the case 110 or the cut surface 118 may be arranged side by side with the central axis C.

Meanwhile, the diameter D1 of the cap plate 121 based on the central axis C of the case 110 may be larger than the diameter D2 of the second opening 125a.

FIG. 5 is an enlarged view of an exemplary bent portion and hemming portion.

Referring to FIG. 3C and FIG. 5, the case 110 may include the recessed portion 117 and the bent portion 114 of the body 113. In addition, the open end of the case 110 may be in a state where the cut surface 118 is exposed through the described cutting process.

Accordingly, the cutting surface 118 or the open end may be bent downward along the height direction of the case 110 to prevent corrosion of the cutting surface 128.

That is, the bent portion 114 may include a hemming portion 114b in which a region including an open end of the case 110 is bent to face the inner surface of the space 109. Such processing may be referred to as hemming process or seaming process. That is, the hemming process or the seaming process may mean that one end or an edge is processed so that a smooth region is exposed to the outside by bending a sharp one end.

FIG. 6 is an enlarged view of a part of FIG. 4.

After the hemming process of FIG. 5, the battery cell manufacturing method according to the present disclosure may again bend another region of the bent portion 114 to bring the bent portion 114 including the hemming portion 114b into contact with the gasket 125 to couple the cap assembly 120 to the case 110. FIG. 6 is an enlarged view of a part of a cross-section of the battery cell 100 in which mechanical assembly is finally completed.

Referring to FIG. 6, in the battery cell manufacturing method according to the present disclosure, another portion of the bent portion 114 on which the hemming portion 114b is formed may be bent to form the deformed portion 114a. That is, the bent portion 114 may include a deformed portion 114a that is bent in a region spaced apart from the open end by a predetermined distance and faces the cap plate, and a hemming portion 114b in which a region including the open end among the deformed portions 114a is bent again and faces the outside.

An upper side 114f of the bent portion 114 along the height direction of the case 110 may be parallel to a cross-section perpendicular to the height direction of the case 110. In order to adjust the height of the battery cell 100 to a predetermined dimension, the height from the other end of the case 110 to the upper surface 114f of the bent portion 114 may not be changed. However, since the hemming portion 114b is located below the deforming portion 114a, the height from the other end of the case 110 to the upper surface 114f of the bent portion 114 may increase at a portion where the hemming portion 114b and the deforming portion 114a overlap. To prevent this, the gasket 125 may be compressed and deformed.

More specifically, the gasket 125 may include a flat portion 125b and a side portion 125c. When the bent portion 114 is bent, the side portion 125c may be bent together. That is, a portion of the side portion 125c may include a folding portion 125d that is bent toward the cap plate 121 along with the bent portion 114.

Further, a portion of the folding portion 125d may be compressed by the hemming portion 114b. That is, the folding portion 125d includes a compression portion 125e that is compressed by the hemming portion 114b, and the thickness of the compression portion 125e may vary.

For example, the gasket 125 may be formed of polybutylene terephthalate.

A part of the folding portion 125d may be compressed by the hemming portion 114b to change the thickness of a portion of the folding portion 125d. That is, the folding portion 125d may further include a compression portion 125e compressed by the hemming portion 114b. The compression portion 125e may face and contact the hemming portion 114b. Thus, the thickness of the compression portion 125e may be less than the thickness of the side portion 125c.

Referring to FIG. 6, the contact between the bent portion 114 and the gasket 125 is illustrated by a thick line. Since the bent portion 114 and the side portion 125c are bent while surrounding the cap plate 121, the case 110 may be sealed through contact between the bent portion 114 and the gasket 125 and the cap plate 121.

Specifically, the contact between the hemming portion 114b and the compression portion 125e, and the contact between the deforming portion 114a and the side portion 125c can improve the sealing force by which the cap assembly 120 seals the case 110.

Referring to FIG. 6, the recessed portion 117 may be located above the electrode assembly 10. The recessed portion 117 may be located closer to the cap assembly 120 rather than the electrode assembly 10. The distance from the central axis to the recessed portion 117 may be smaller than the diameter of the body 113 in which the electrode assembly 10 is accommodated because it supports the cap assembly 120.

Meanwhile, the radius R1 of the flat portion 125b with respect to the central axis C may be larger than the radius R2 of the cap plate 121.

Further, the radius R3 of the folding portion 125d with respect to the central axis C may be less than a radius R4 of the second opening 125a.

Further, a radius R5 to the bent portion 114 with respect to the central axis C may be larger than a radius R3 to the folded portion 125d.

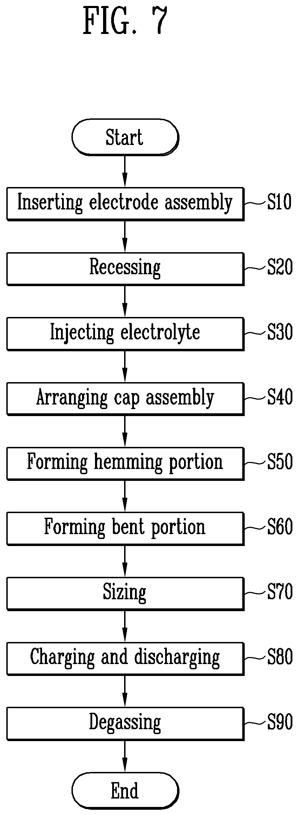

FIG. 7 is a flowchart illustrating a method of assembling a battery cell according to the present disclosure.

For reference, the same parts as those described with reference to FIGS. 3A to 6 are omitted.

The battery cell manufacturing method according to the present disclosure may include: inserting the electrode assembly 10 through a first opening 911 located at one end of the case 110 (S10); recessing an area apart from the one end of the cases 110 by a predetermined distance toward the space 109 to form a recessed portion 117 (S20); arranging the cap assembly 120 closing the first opening 911 so as to be supported by the recessed portions 117 (S40); folding an area including the one end of cases 110 so as to face an inner surface of the space 109 to form a hemming portion (S50); and folding between the one end of case 110 and the recessed portion 117 so that the hemming portion comes into contact with the cap assembly 120 to form a bent portion 114 (S60).

The step S60 of forming the bent portion 114 may be divided into at least two or more times to form the bent portion 114, rather than bending it directly at a desired final angle or second angle at a time. That is, the step S60 of forming the bent portion 114 may include a first bending step (not shown) of bending between one end of the case 110 and the recessed portion 117 at a first angle, and a second bending step (not illustrated) of bending again from the first angle to a second angle after the first bending step.

In addition, the battery cell manufacturing method according to the present disclosure may further include a sizing step S70 of pressing the bent portion 114 and the hemming portion so that the height from the other end of the case 110 to the cap assembly 120 becomes a predetermined height after the step S60 of forming the bent portion 114.

In the sizing step S70, the battery cell manufacturing method according to the present disclosure presses the upper surface 114f of the bent portion 114, so that the battery cell 100 being manufactured may be formed at a predetermined final height.

Meanwhile, the battery cell manufacturing method according to the present disclosure may further include, after the recessing step S20 of forming the recessed portion 117, a step S30 of injecting the electrolyte into the space 109 through the injection hole penetrating the cap assembly 120.

In addition, the battery cell manufacturing method according to the present disclosure may further include a step of charging and discharging S80 the battery cell 100 after the step S60 of forming the bent portion 114.

In addition, the method for manufacturing a battery cell according to the present disclosure may further include a step S90 of degassing for removing the gas generated therein through the injection hole (not shown) after the step S80 of charging and discharging the battery cell 100 is performed.

Since the present disclosure may be implemented in various forms, the scope of rights is not limited to the-described embodiments. Therefore, if the modified embodiment includes the elements of the claims of the present disclosure, it should be considered to fall within the scope of the present disclosure.

The description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

Some of the aspects of the present disclosure are as follows:
Aspect 1: A battery cell comprising: an electrode assembly including a first electrode, a second electrode, and a separator disposed between the first electrode and the second electrode; a case having a first opening at one end and forming a space in which the electrode assembly is accommodated through the first opening; and a cap assembly coupled with the case to form the space together with the case and closing the first opening; wherein the case includes: a recessed portion formed by recessing a region spaced apart from the one end of the case by a predetermined distance toward the space and supporting the cap assembly;
   a bent portion bent inwardly toward the space between one end of the case and the recessed portion; and a hemming portion bent toward the recessed portion in an area including the one end of the case to be in contact with the cap assembly.
Aspect 2: The battery cell according to aspect 1, wherein the upper side of the bent portion is parallel to a cross section perpendicular to the height direction of the case.
Aspect 3: The battery cell according to aspect 1, wherein the cap assembly includes a gasket including a sheet-shaped flat portion, a second opening penetrating the flat portion, and a side portion bent along the height direction of the case at the outermost edge of the flat portion; and a cap plate located on the flat portion to close the first opening and the second opening.
Aspect 4: The battery cell according to aspect 3, wherein the side portion includes a folding portion folded toward the cap plate together with the bent portion, and wherein a part of the folding portion is compressed by the hemming portion.
Aspect 5: The battery cell according to preceding aspects, wherein the case has a cylindrical shape, the bent portion is bent along the radial direction of the case toward the central axis of the case parallel to the height direction of the case, and the hemming portion is formed by bending in a direction away from the central axis of the case along the radial direction of the case.
Aspect 6: The battery cell according to aspect 5, wherein the recessed portion is formed along the circumferential direction of the case.
Aspect 7: The battery cell according to aspect 5, wherein the cap assembly includes a gasket including a disc-shaped flat portion, a circular second opening penetrating the flat portion, and a side portion formed by bending along the height direction of the case on the outer surface of the flat portion; a disc-shaped cap plate positioned on the flat portion to close the first opening and the second opening ; and a folding portion folded toward the central axis along the radial direction of the case by the bent portion among a portion of the side portion, and wherein a part of the folding portion is compressed by the hemming portion.
Aspect 8: The battery cell according to aspect 7, wherein the outer diameter of the flat portion is larger than the outer diameter of the cap plate, wherein the radius from the central axis to the folding portion is smaller than the radius of the second opening; wherein the radius from the central axis to the bent portion is larger than the radius from the central axis to the folding portion; and wherein the diameter from the central axis to the cap plate is larger than the diameter of the second opening.
Aspect 9: The battery cell according to preceding aspects, wherein the recessed portion is located closer to the cap assembly rather than the electrode assembly.
Aspect 10: The battery cell according to preceding aspects, further comprising an electrolyte for immersing the electrode assembly in the space.
Aspect 11: A method for manufacturing a battery cell including an electrode assembly and a case forming a space for accommodating the electrode assembly, comprising: a step of inserting the electrode assembly through a first opening located at one end of the case; a step of recessing an area apart from one end of the case by a distance toward the space to form a recessed portion; a step of arranging a cap assembly for closing the first opening to be supported by the recessed portion; and a step of forming a hemming portion by bending an area including the one end of the case to face an inner surface of the space; and a step of forming a bent portion by bending a portion between the one end of the case and the recessed portion so that the hemming portion comes into contact with the cap assembly.
Aspect 12: The method according to aspect 11, further comprising a sizing step of pressing the bent portion and the hemming portion so that the height from the other end of the case to the cap assembly becomes a predetermined height after the step of forming the bent portion.
Aspect 13: The method according to aspect 11, further comprising a step of injecting an electrolyte into the space through an injection hole penetrating the cap assembly after the step of forming the recessed portion.
Aspect 14: The method according to any one of aspects 11 to 13, further comprising a step of charging and discharging the battery cell after the step of forming the bent portion.
Aspect 15: The method according to aspect 14, further comprising a step of degassing for removing the gas inside the space through the injection hole after the step of charging and discharging the battery cell.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A battery cell comprising:
an electrode assembly including a first electrode, a second electrode, and a separator disposed between the first electrode and the second electrode;
a case having a first opening at one end and forming a space in which the electrode assembly is accommodated through the first opening; and
a cap assembly coupled with the case to form the space together with the case and closing the first opening;
wherein the case includes:
a recessed portion formed by recessing a region spaced apart from the one end of the case by a predetermined distance toward the space and supporting the cap assembly;
a bent portion bent inwardly toward the space between one end of the case and the recessed portion; and
a hemming portion bent toward the recessed portion in an area including the one end of the case to be in contact with the cap assembly.

2. The battery cell according to claim 1, wherein the upper side of the bent portion is parallel to a cross section perpendicular to the height direction of the case.

3. The battery cell according to claim 1, wherein the cap assembly includes a gasket including a sheet-shaped flat portion, a second opening penetrating the flat portion, and a side portion bent along the height direction of the case at the outermost edge of the flat portion; and a cap plate located on the flat portion to close the first opening and the second opening.

4. The battery cell according to claim 3, wherein the side portion includes a folding portion folded toward the cap plate together with the bent portion, and wherein a part of the folding portion is compressed by the hemming portion.

5. The battery cell according to preceding claims, wherein the case has a cylindrical shape, the bent portion is bent along the radial direction of the case toward the central axis of the case parallel to the height direction of the case, and the hemming portion is formed by bending in a direction away from the central axis of the case along the radial direction of the case.

6. The battery cell according to claim 5, wherein the recessed portion is formed along the circumferential direction of the case.

7. The battery cell according to claim 5, wherein the cap assembly includes a gasket including a disc-shaped flat portion, a circular second opening penetrating the flat portion, and a side portion formed by bending along the height direction of the case on the outer surface of the flat portion; a disc-shaped cap plate positioned on the flat portion to close the first opening and the second opening ; and a folding portion folded toward the central axis along the radial direction of the case by the bent portion among a portion of the side portion, and wherein a part of the folding portion is compressed by the hemming portion.

8. The battery cell according to claim 7, wherein the outer diameter of the flat portion is larger than the outer diameter of the cap plate,
wherein the radius from the central axis to the folding portion is smaller than the radius of the second opening;
wherein the radius from the central axis to the bent portion is larger than the radius from the central axis to the folding portion; and
wherein the diameter from the central axis to the cap plate is larger than the diameter of the second opening.

9. The battery cell according to preceding claims, wherein the recessed portion is located closer to the cap assembly rather than the electrode assembly.

10. The battery cell according to preceding claims, further comprising an electrolyte for immersing the electrode assembly in the space.

11. A method for manufacturing a battery cell including an electrode assembly and a case forming a space for accommodating the electrode assembly, comprising:
a step of inserting the electrode assembly through a first opening located at one end of the case;
a step of recessing an area apart from one end of the case by a distance toward the space to form a recessed portion;
a step of arranging a cap assembly for closing the first opening to be supported by the recessed portion; and
a step of forming a hemming portion by bending an area including the one end of the case to face an inner surface of the space; and
a step of forming a bent portion by bending a portion between the one end of the case and the recessed portion so that the hemming portion comes into contact with the cap assembly.

12. The method according to claim 11, further comprising a sizing step of pressing the bent portion and the hemming portion so that the height from the other end of the case to the cap assembly becomes a predetermined height after the step of forming the bent portion.

13. The method according to claim 11, further comprising a step of injecting an electrolyte into the space through an injection hole penetrating the cap assembly after the step of forming the recessed portion.

14. The method according to any one of claims **11** to 13, further comprising a step of charging and discharging the battery cell after the step of forming the bent portion.

15. The method according to claim 14, further comprising a step of degassing for removing the gas inside the space through the injection hole after the step of charging and discharging the battery cell.
